# EUROPEAN PATENT APPLICATION

(11) **EP 3 982 684 A1**
(43) Date of publication of application: **13.04.2022**
(21) Application number: 20819346.6
(22) Date of filing: 26.04.2020
(51) Int. Cl.: H04W 72/12, H04L 1/00, H04L 1/16, H04L 5/00, H04W 74/00

(54) **SIGNALING TRANSMISSION METHOD AND DEVICE, SIGNALING RECEIVING METHOD AND DEVICE, STORAGE MEDIUM, AND TERMINAL**

(30) Priority: 06.06.2019 CN 201910493280
(71) Applicant: Spreadtrum Communications (Shanghai) Co., Ltd., Shanghai 201203 (CN)
(72) Inventor: JAUH, Yuhren, Shanghai 201203 (CN); XU, Yanchao, Shanghai 201203 (CN); YU, Chinghwa, Shanghai 201203 (CN)
(74) Representative: Nordmeyer, Philipp Werner
(86) International application number: PCT/CN2020/086937
(87) International publication number: WO 2020/244337

(57) **Abstract**

A signaling transmission method and device, a signaling receiving method and device, a storage medium, and a terminal. The signaling transmission method comprises: configuring indication signaling, the indication signaling being used for notifying an indication signaling receiver to dynamically abort a currently transmitted data packet; and sending the indication signaling. By means of the technical solution provided by the present invention, the time delay can be shortened so as to satisfy the requirement of high-timeliness communication.

## Description

### CROSS-REFERENCE TO RELATED APPLICATIONS

This application claims the benefit of priority to Chinese Patent Application No. 201910493280.7, filed on June 6, 2019, and entitled "SIGNALING TRANSMISSION METHOD AND DEVICE, SIGNALING RECEPTION METHOD AND DEVICE, STORAGE MEDIUM AND TERMINAL", the entire disclosure of which is incorporated herein by reference.

### TECHNICAL FIELD

The present disclosure generally relates to communication technology field, and more particularly, to a signaling transmission method and device, a signaling reception method and device, a storage medium and a terminal.

### BACKGROUND

Real time application (RTA) in WiFi devices is getting popular. Latency is one of key factors for RTA.

The current Institute of Electrical and Electronics Engineers 802.11 (IEEE 802.11) standard (for example, the Wireless Local Area Network (WLAN) standard) cannot guarantee latency at the worst case.

### SUMMARY

Embodiments of the present disclosure may shorten latency to meet communication requirements of time sensitive packets in a WLAN system.

In an embodiment of the present disclosure, a signaling transmission method is provided, including: configuring an indication signaling, wherein the indication signaling is used to notify a receiver of the indication signaling to dynamically suspend transmission of a current data package being transmitted; and transmitting the indication signaling.

Optionally, the indication signaling is transmitted on a second link other than a first link on which the current data package is being transmitted by the receiver of the indication signaling.

Optionally, the method further includes: receiving a feedback signaling on the second link, wherein the feedback signaling is in response to the indication signaling, and indicates that the receiver of the indication signaling is about to suspend or has suspended the transmission of the current data package.

Optionally, the indication signaling and/or the feedback signaling is a data frame or a signal sequence.

Optionally, the indication signaling includes a link identifier which points to a link where the receiver of the indication signaling is located.

Optionally, the method further includes: detecting whether the receiver of the indication signaling has suspended the transmission of the current data package.

In an embodiment of the present disclosure, a signaling reception method is provided, including: receiving an indication signaling, wherein the indication signaling is used to notify a receiver of the indication signaling to dynamically suspend transmission of a current data package being transmitted; and extracting the indication signaling.

Optionally, the indication signaling is transmitted on a second link other than a first link on which the current data package is being transmitted by the receiver of the indication signaling.

Optionally, the method further includes: interrupting the transmission of the current data package being transmitted.

Optionally, the current data package being transmitted is an aggregated data package including a plurality of data packets, and interrupting the transmission of the current data package being transmitted includes: interrupting transmission of one of the plurality of data packets which is being transmitted and suspending transmission of other data packets of the plurality of data packets; or after transmission of one of the plurality of data packets which is being transmitted is completed, suspending transmission of other data packets of the plurality of data packets.

Optionally, the indication signaling includes a link identifier which points to a link where the receiver of the indication signaling is located.

Optionally, the method further includes: in response to the indication signaling, transmitting a feedback signaling on the second link, wherein the feedback signaling indicates that the receiver of the indication signaling is about to suspend or has suspended the transmission of the current data package.

Optionally, the indication signaling and/or the feedback signaling is a data frame or a signal sequence.

In an embodiment of the present disclosure, a signaling transmission device is provided, including: a configuring circuitry configured to configure an indication signaling, wherein the indication signaling is used to notify a receiver of the indication signaling to dynamically suspend transmission of a current data package being transmitted; and a transmitting circuitry configured to transmit the indication signaling.

In an embodiment of the present disclosure, a signaling reception device is provided, including: a receiving circuitry configured to receive an indication signaling, wherein the indication signaling is used to notify a receiver of the indication signaling to dynamically suspend transmission of a current data package being transmitted; and an extracting circuitry configured to extract the indication signaling.

In an embodiment of the present disclosure, a storage medium having computer instructions stored therein is provided, wherein when the computer instructions are executed, the above method is performed.

In an embodiment of the present disclosure, a terminal including a memory and a processor is provided, wherein the memory has computer instructions stored therein, and when the processor executes the computer instructions, the above method is performed.

Embodiments of the present disclosure may provide following advantages.

Embodiments of the present disclosure provide a signaling transmission method, including: configuring an indication signaling, wherein the indication signaling is used to notify a receiver of the indication signaling to dynamically suspend transmission of a current data package being transmitted; and transmitting the indication signaling. In the embodiments, the indication signaling is configured, so that the receiver of the indication signaling may suspend transmission of the current data package being transmitted, and accordingly a transmitter of the indication signaling may acquire a transmission opportunity rapidly to transmit time sensitive data packets. In this way, latency may be shortened, and thus transmission requirements of time sensitive data packets (RTA packets) may be met.

Further, the indication signaling is transmitted on a second link other than a first link on which the current data package is being transmitted by the receiver of the indication signaling. In the embodiments, different links are used to transmit the data package (such as on the first link) and the indication signaling (such as on the second link) in a multi-link communication system, so that the receiver of the indication signaling may interrupt a current data package transmission process to achieve time sensitive data communication (such as RTA communication or accelerated retransmission due to transmission delay caused by transmission failure), which provides possibility for time sensitive data communication.

Further, the signaling transmission method further includes: receiving a feedback signaling on the second link, wherein the feedback signaling is in response to the indication signaling, and indicates that the receiver of the indication signaling is about to suspend or has suspended the transmission of the current data package. In the embodiments, by receiving the feedback signaling, the transmitter of the indication signaling can be informed that the receiver of the indication signaling is about to suspend or has suspended transmitting the current data package, so that the transmitter of the indication signaling can transmit time sensitive data packets (for example, RTA packets) for communication of time sensitive data packets.

### BRIEF DESCRIPTION OF THE DRAWINGS

Figure 1 is a flow chart of a signaling transmission method according to an embodiment;
Figure 2 is a flow chart of a signaling reception method according to an embodiment;
Figure 3 is a diagram of indication signaling in the signaling transmission method as shown in Figure 1;
Figure 4 is a structural diagram of a signaling transmission device according to an embodiment; and
Figure 5 is a structural diagram of a signaling reception device according to an embodiment.

### DETAILED DESCRIPTION

As described in the background, existing Wi-Fi transmission solutions cannot support RTA.

Inventors found based on research that, there are many factors that contribute to long latency of Wi-Fi transmission, and one of these factors is a too long time of air interface of a packet duration. To transmit an RTA packet in time to further realize RTA communication, interruption can be requested when the packet duration is too long.

Embodiments of the present disclosure provide a signaling transmission method, including: configuring an indication signaling, wherein the indication signaling is used to notify a receiver of the indication signaling to dynamically suspend transmission of a current data package being transmitted; and transmitting the indication signaling. In the embodiments, the indication signaling is configured, so that the receiver of the indication signaling may suspend transmission of the current data package being transmitted, and accordingly a transmitter of the indication signaling may acquire a transmission opportunity rapidly to transmit time sensitive data packets. In this way, latency may be shortened, and thus transmission requirements of time sensitive data packets (RTA packets) may be met.

In order to clarify the objects, characteristics and advantages of the disclosure, embodiments of present disclosure will be described in detail in conjunction with accompanying drawings.

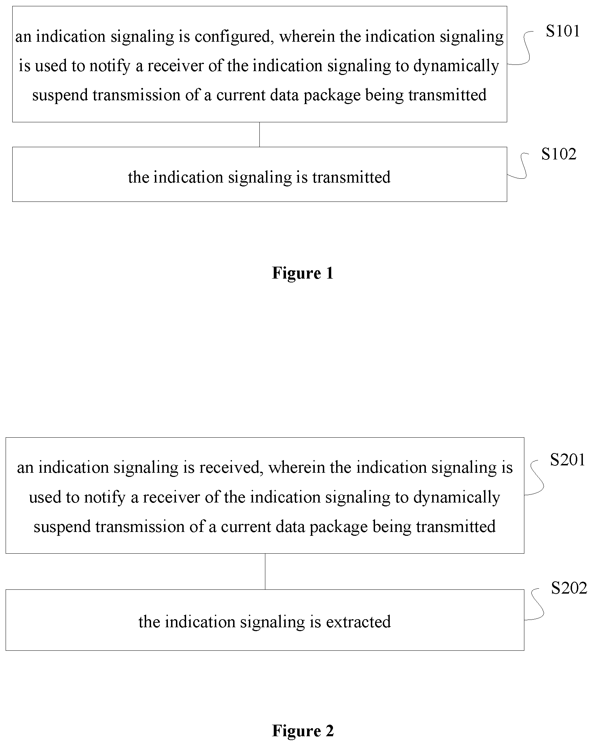

Figure 1 is a flow chart of a signaling transmission method according to an embodiment. The method may be performed by a WLAN Access Point (AP) or Station (STA). In some embodiments, the method may include S101 and S102.

In S101, an indication signaling is configured, wherein the indication signaling is used to notify a receiver of the indication signaling to dynamically suspend transmission of a current data package being transmitted.

In S102, the indication signaling is transmitted.

In some embodiments, the AP and the STA may use a same identification number to form a Basic Service Set (BSS). Terminals within the BSS can communicate with each another based on a same Service Set Identifier (SSID).

In S101, when time sensitive data packets (for example, RTA packets) are transmitted within the BSS, during data transmission, the AP and the STA can dynamically suspend transmission of a data package with a relatively long duration which is currently being transmitted by configuring indication signaling, thereby shortening latency caused by a long time occupied by an air interface of the data packet, so as to transmit time sensitive data packets (for example, RTA packets). It should be noted that, compared with existing techniques, the above interruption mechanism may shorten the latency caused by a long time occupied by the air interface of the data packet.

In some embodiments, if the AP or the STA needs to transmit RTA packets or other time sensitive data packets, that is, if data packets to be transmitted are RTA packets or other time sensitive data packets, when it is found that an air interface of the first link is being occupied by a data packet with a too long duration or by a group of continuously transmitted data packets with a too long total duration, the AP or the STA may configure an indication signaling on a second link to indicate the receiver of the indication signaling to dynamically suspend the current data package being transmitted on a first link.

In S102, the AP or the STA may transmit the indication signaling. It should be noted that the indication signaling may be transmitted on a link other than the link on which the receiver of the indication signaling transmits the current data package. For example, the indication signaling is transmitted on the second link, the current data package is transmitted on the first link, and the second link is different from the first link. In some embodiments, the second link may be a control link on which merely control signalings are transmitted generally.

In some embodiments, if an AP or a STA receiving the indication signaling is currently transmitting a data package (for example, an aggregated data package), the AP or the STA may interrupt the transmission of the current data package being transmitted after extracting the indication signaling.

In some embodiments, the indication signaling may include a link identifier (also referred to as a link number or a link index), where the link identifier is used to point to a link where the receiver of the indication signaling (i.e., the terminal performing the indication signaling) is located. The link identifier is determined by the terminal transmitting the indication signaling, so that the terminal receiving the indication signaling determines whether to suspend transmission of the data package being transmitted. The AP or the STA that is located on the link with the link identifier and is transmitting a data package may suspend transmission of the data package being transmitted after receiving the indication signaling. Therefore, with the link identifier included in the indication signaling, the AP or the STA working on the link with the link identifier may suspend or interrupt the transmission of the data package being transmitted.

For example, the multilink system includes a first link, a second link and a third link. The second link is a control link on which merely control signalings are transmitted generally, and the first link and the third link are data links on which data packages can be transmitted. Under this condition, if the indication signaling includes an identifier of the first link, an AP or a STA working on the first link may interrupt transmission of a current data package being transmitted, after receiving the indication signaling, and an AP or a STA working on the third link may drop the indication signaling without interrupting transmission of a current data package being transmitted, after receiving the indication signaling.

In some embodiments, if no data package is currently being transmitted, a data package transmitted subsequently may be shortened to meet transmission requirements of the time sensitive data packets.

In some embodiments, after transmitting the indication signaling, the AP or the STA may further detect whether the receiver of the indication signaling has suspended transmission of the currently transmitted data package. If the detection result indicates that the receiver of the indication signaling has suspended transmission of the currently transmitted data package, the AP or the STA may be capable of transmitting time sensitive data packets for time sensitive communication. Transmitting time sensitive data packets may include acquiring a transmission opportunity without competition or with a relatively short competition window.

In some embodiments, after transmitting the indication signaling, the AP or the STA may receive a feedback signaling from the receiver of the indication signaling. The indication signaling and the feedback signaling may be data frames or signal sequences. In some embodiments, in response to the indication signaling, the receiver of the indication signaling may transmit the feedback signaling which indicates that the receiver of the indication signaling is about to suspend or has suspended transmission of the current data package being transmitted.

In some embodiments, when the indication signaling and/or the feedback signaling is a data frame, it can be used to notify the receiver of the indication signaling to dynamically suspend transmission of the current data package being transmitted, and may further carry a link identifier. When the indication signaling and/or the feedback signaling is a signal sequence (for example, a tone), it can be used to notify the receiver of the indication signaling to dynamically suspend transmission of the current data package being transmitted, or may be combined with other signaling frames or a special format so as to carry the link identifier.

After receiving the feedback signaling, the AP or the STA may transmit time sensitive data packets if it is confirmed that transmission of the originally transmitted data packets on the first link has been suspended.

Figure 2 is a flow chart of a signaling reception method according to an embodiment. The signaling reception method may be performed by the receiver of the indication signaling, such as an AP or a STA.

In some embodiments, the method may include S201 and S202.

In S201, an indication signaling is received, wherein the indication signaling is used to notify a receiver of the indication signaling to dynamically suspend transmission of a current data package being transmitted.

In S202, the indication signaling is extracted.

In some embodiments, in S201, the AP or the STA (the receiver of the indication signaling) may receive the indication signaling. The indication signaling is transmitted by another STA or another AP, and is used to notify the receiver of the indication signaling to dynamically suspend transmission of the current data package being transmitted.

In some embodiments, the indication signaling may be configured when the another STA or the another AP determines that a data packet to be transmitted is an RTA packet.

In S202, the receiver of the indication signaling may extract the indication signaling.

In some embodiments, the receiver of the indication signaling may transmit and receive data on multiple links/channels in parallel. Under this condition, the indication signaling may be received on the second link which is different from a first link on which the current data package is being transmitted. That is, the first link is the link where the receiver of the instruction signaling transmits the current data package.

If a duration of the current data package being transmitted by the receiver of the indication signaling is relatively long, and the indication signaling is just received on another link, the receiver of the indication signaling may interrupt the transmission of the current data package being transmitted.

In some embodiments, the current data package being transmitted is an aggregated data package including a plurality of data packets, and the receiver of the indication signaling may interrupt transmission of one of the plurality of data packets which is being transmitted and suspend transmission of other data packets of the plurality of data packets.

Alternatively, the current data package being transmitted is an aggregated data package including a plurality of data packets, and after transmission of one of the plurality of data packets which is being transmitted is completed, the AP or the STA may suspend transmission of other data packets of the plurality of data packets.

In some embodiments, the indication signaling may include a link identifier which points to a link where the receiver of the indication signaling is located.

In some embodiments, the receiver of the indication signaling may transmit a feedback signaling which is to be received by the another AP or the another STA. The feedback signaling indicates that the receiver of the indication signaling has received the indication signaling and is about to suspend or has suspended the transmission of the current data package. In some embodiments, the feedback signaling is a data frame or a signal sequence.

Atypical application scenario is described as an example below.

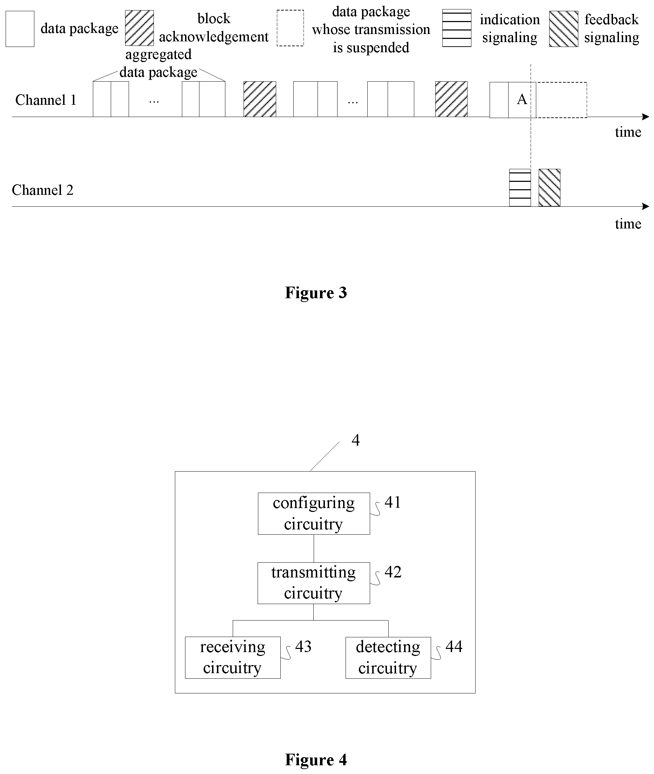

The AP or the STA may transmit indication signaling. Referring to Figure 3, Figure 3 is a diagram of indication signaling in the signaling transmission method as shown in Figure 1. The AP or the STA may transmit data packets and signaling packets on multiple links (for example, multiple transmission channels). There are two transmission channels in Figure 3, including channel 1 and channel 2.

Still referring to Figure 3, the AP or the STA may transmit an aggregated data package on channel 1. After successfully receiving the aggregated data package, a receiver may transmit a Block Acknowledgement (BA), and the AP or the STA may receive the BA. In some embodiments, the aggregated data package is an Aggregated Media Access Control Protocol Data Unit (AMPDU), and a single data packet in the aggregated data package may be a Media Access Control Protocol Data Unit (MPDU).

During the transmission of the aggregated data package by the AP or the STA, if another data transmitter (for example, a STA or an AP with transmission requirements of RTA packets) generates data to be transmitted which are RTA packets or other time sensitive data packets, the another data transmitter may transmit an indication signaling on channel 2, which is used to notify a receiver of the indication signaling to dynamically suspend transmission of a current data package being transmitted. If the AP or the STA receives the indication signaling (a vertical dotted line in the Figure 3 represents a moment of successful reception) on channel 2 when transmitting the aggregated data package on channel 1, the AP or the STA may suspend transmission of other data packages (i.e., the data package marked with a dotted frame in Figure 3) after transmission of a current data package (i.e., the data package marked with A in Figure 3) is completed.

In some embodiments, after receiving the indication signaling, the AP or the STA may further transmit a feedback signaling on channel 2, where the feedback signaling indicates that the receiver of the indication signaling is about to suspend or has suspended transmission of the current data package being transmitted. Once the transmitter of the indication signaling receives the feedback signaling, it may perform RTA communication or other time sensitive data packet communication on channel 1.

Those skilled in the art could understand that although not shown in figures, when the AP or the STA transmits the aggregated data package on channel 1 and receives the indication signaling from another transmitter on channel 2, the AP or the STA may suspend transmission of other data packages after interrupting the transmission of the current data package.

It should be noted that the channel for transmitting the indication signaling may use other frequency bands or other links in addition to other transmission channels. Further, the STA or the AP that receives the indication signaling may not transmit the feedback signaling. Instead, a demander for transmission of RTA packets or other time sensitive data packets may detect automatically. After confirming that the transmission of the aggregated data package has been interrupted, the demander for transmission of RTA packets or other time sensitive data packets may transmit RTA packets or other time sensitive data packets.

In Figure 3, the indication signaling and the feedback signaling are both data frames. In practice, the indication signaling and/or the feedback signaling may be a signal sequence, which is not shown in Figure 3.

Those skilled in the art could understand that S201 and S202 can be regarded to be corresponding to S101 and S102 described in the embodiment as shown in Figure 1. They are complementary in detailed implementation principles and logic. Therefore, the signaling reception method and terminology may be referred to the above descriptions of the embodiment as shown in Figure 1, which are not described in detail here.

From above, in the embodiments of the present disclosure, transmission of the current data package being transmitted is suspended based on the indication signaling, thereby shortening a time occupied by an air interface of the data package. In this way, latency may be shortened, and transmission requirements of RTA packets or other time sensitive data packets may be met.

Figure 4 is a structural diagram of a signaling transmission device according to an embodiment. The signaling transmission device 4 may be applied in a WLAN AP or a WLAN STAto perform the method as shown in Figure 1.

The signaling transmission device 4 includes: a configuring circuitry 41 configured to configure an indication signaling, wherein the indication signaling is used to notify a receiver of the indication signaling to dynamically suspend transmission of a current data package being transmitted; and a transmitting circuitry 42 configured to transmit the indication signaling.

In some embodiments, the indication signaling is transmitted on a second link other than a first link on which the current data package is being transmitted by the receiver of the indication signaling.

In some embodiments, the device 4 further includes: a receiving circuitry 43 configured to receive a feedback signaling on the second link, wherein the feedback signaling is in response to the indication signaling, and indicates that the receiver of the indication signaling is about to suspend or has suspended the transmission of the current data package.

In some embodiments, the indication signaling and/or the feedback signaling is a data frame or a signal sequence.

In some embodiments, the indication signaling includes a link identifier which points to a link where the receiver of the indication signaling is located.

In some embodiments, the device 4 further includes: a detecting circuitry 44 configured to detect whether the receiver of the indication signaling has suspended the transmission of the current data package.

More details of working principles and working modes of the device 4 can be found in the above descriptions of Figure 1, and are not described here.

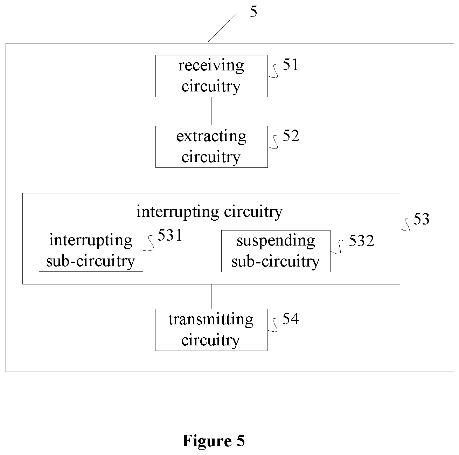

Figure 5 is a structural diagram of a signaling reception device according to an embodiment. The signaling reception device 5 can perform the method as shown in Figure 2, and may be applied in an AP or a STA.

In some embodiments, the signaling reception device 5 includes: a receiving circuitry 51 configured to receive an indication signaling, wherein the indication signaling is used to notify a receiver of the indication signaling to dynamically suspend transmission of a current data package being transmitted; and an extracting circuitry 52 configured to extract the indication signaling.

In some embodiments, the indication signaling is transmitted on a second link other than a first link on which the current data package is being transmitted by the receiver of the indication signaling.

In some embodiments, the device 5 further includes an interrupting circuitry 53 configured to interrupt the transmission of the current data package being transmitted.

In some embodiments, the current data package being transmitted is an aggregated data package including a plurality of data packets, and the interrupting circuitry 53 includes: an interrupting sub-circuitry 531 configured to interrupt transmission of one of the plurality of data packets which is being transmitted and suspend transmission of other data packets of the plurality of data packets; or a suspending sub-circuitry 532 configured to: after transmission of one of the plurality of data packets which is being transmitted is completed, suspend transmission of other data packets of the plurality of data packets.

In some embodiments, the indication signaling includes a link identifier which points to a link where the receiver of the indication signaling is located.

In some embodiments, the device 5 further includes a transmitting circuitry 54 configured to: in response to the indication signaling, transmit a feedback signaling on the second link, wherein the feedback signaling indicates that the receiver of the indication signaling is about to suspend or has suspended the transmission of the current data package.

In some embodiments, the indication signaling and/or the feedback signaling is a data frame or a signal sequence.

More details of working principles and working modes of the device 5 can be found in the above descriptions of Figure 2, and are not described here.

In an embodiment of the present disclosure, a storage medium having computer instructions stored therein is provided, wherein when the computer instructions are executed, the above methods as shown in Figures 1 to 3 are performed. The storage medium may include a non-volatile or non-transitory memory. The storage medium may include a Read Only Memory (ROM), a Random Access Memory (RAM), a magnetic disk or an optical disk.

In an embodiment of the present disclosure, a terminal including a memory and a processor is provided, wherein the memory has computer instructions stored therein, and when the processor executes the computer instructions, the above methods as shown in Figures 1 to 3 are performed. In some embodiments, the terminal may be a WLAN AP or a WLAN STA.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A signaling transmission method, **characterized by** comprising:
configuring an indication signaling, wherein the indication signaling is used to notify a receiver of the indication signaling to dynamically suspend transmission of a current data package being transmitted; and
transmitting the indication signaling.

2. The method according to claim 1, **characterized in that** the indication signaling is transmitted on a second link other than a first link on which the current data package is being transmitted by the receiver of the indication signaling.

3. The method according to claim 2, **characterized by** further comprising:
receiving a feedback signaling on the second link, wherein the feedback signaling is in response to the indication signaling, and indicates that the receiver of the indication signaling is about to suspend or has suspended the transmission of the current data package.

4. The method according to claim 3, **characterized in that** the indication signaling and/or the feedback signaling is a data frame or a signal sequence.

5. The method according to any one of claims 2 to 4, **characterized in that** the indication signaling comprises a link identifier which points to a link where the receiver of the indication signaling is located.

6. The method according to claim 1 or 2, **characterized by** further comprising:
detecting whether the receiver of the indication signaling has suspended the transmission of the current data package.

7. A signaling reception method, **characterized by** comprising:
receiving an indication signaling, wherein the indication signaling is used to notify a receiver of the indication signaling to dynamically suspend transmission of a current data package being transmitted; and
extracting the indication signaling.

8. The method according to claim 7, **characterized in that** the indication signaling is transmitted on a second link other than a first link on which the current data package is being transmitted by the receiver of the indication signaling.

9. The method according to claim 8, **characterized by** further comprising:
interrupting the transmission of the current data package being transmitted.

10. The method according to claim 9, **characterized in that** the current data package being transmitted is an aggregated data package comprising a plurality of data packets, and interrupting the transmission of the current data package being transmitted comprises:
interrupting transmission of one of the plurality of data packets which is being transmitted and suspending transmission of other data packets of the plurality of data packets; or
after transmission of one of the plurality of data packets which is being transmitted is completed, suspending transmission of other data packets of the plurality of data packets.

11. The method according to any one of claims 8 to 10, **characterized in that** the indication signaling comprises a link identifier which points to a link where the receiver of the indication signaling is located.

12. The method according to any one of claims 8 to 10, **characterized by** further comprising:
in response to the indication signaling, transmitting a feedback signaling on the second link, wherein the feedback signaling indicates that the receiver of the indication signaling is about to suspend or has suspended the transmission of the current data package.

13. The method according to claim 12, **characterized in that** the indication signaling and/or the feedback signaling is a data frame or a signal sequence.

14. A signaling transmission device, **characterized by** comprising:
a configuring circuitry configured to configure an indication signaling, wherein the indication signaling is used to notify a receiver of the indication signaling to dynamically suspend transmission of a current data package being transmitted; and
a transmitting circuitry configured to transmit the indication signaling.

15. A signaling reception device, **characterized by** comprising:
a receiving circuitry configured to receive an indication signaling, wherein the indication signaling is used to notify a receiver of the indication signaling to dynamically suspend transmission of a current data package being transmitted; and
an extracting circuitry configured to extract the indication signaling.

16. A storage medium having computer instructions stored therein, **characterized in that** when the computer instructions are executed, the method according to any one of claims 1 to 6 or any one of claims 7 to 13 is performed.

17. A terminal comprising a memory and a processor, **characterized in that** the memory has computer instructions stored therein, and when the processor executes the computer instructions, the method according to any one of claims 1 to 6 or any one of claims 7 to 13 is performed.
